# EUROPEAN PATENT APPLICATION

(11) **EP 1 426 088 A1**
(43) Date of publication of application: **09.06.2004**
(21) Application number: 03257371.9
(22) Date of filing: 21.11.2003
(51) Int. Cl.: B01D 27/10

(54) **Fluid filter with filter media bypass valve assembly**

(30) Priority: 05.12.2002 US 310289
(71) Applicant: Arvin Technologies, Inc., Troy, MI 48084 (US)
(72) Inventor: Morton, Lester K., Fayetteville NC 28304 (US)
(74) Representative: Croston, David

(57) **Abstract**

A fluid filter assembly includes a filter housing, a filter media positioned to lie in a filter chamber provided in the filter housing, and a filter media end cap including an end plate coupled to the filter media and a bypass valve assembly clamped to the end plate without using any weldment. The end cap further includes a spring housing appended to the end plate, a piston closure seat clamped to the end plate and formed to include a bypass inlet aperture, and a piston closure biased by a spring normally to close the bypass inlet aperture to block flow of unfiltered fluid extant in the filter chamber through the bypass inlet aperture.

## Description

The present disclosure relates to fluid filters, and in particular to oil filter assemblies for use in a vehicle. More particularly, the present disclosure relates to filter media bypass valves for oil filters.

Oil filters are used to clean lubricating oil passed through stationary or vehicle-mounted internal combustion engines. Such oil filters function during engine operation to extract carbon deposits that result from burning of fuel, debris resulting from engine wear, rust from metal engine components, and other solid contaminants from such lubricating oil. Engine makers prescribe periodic replacement of engine oil filters. Other filters are used to filter fuel, coolant, and hydraulic fluids.

According to the present disclosure, a fluid filter assembly includes a filter housing, a filter media positioned to lie in a filter chamber provided in the filter housing, and a filter media end cap including an end plate coupled to the filter media and a bypass valve assembly clamped to the end plate without using any weldment. In an illustrated embodiment, the end cap further includes a spring housing appended to the end plate, a piston closure seat clamped to the end plate and formed to include a bypass inlet aperture, and a piston closure biased by a spring normally to close the bypass inlet aperture to block flow of unfiltered fluid extant in the filter chamber through the bypass inlet aperture.

Additional features of the present disclosure will become apparent to those skilled in the art upon consideration of the following detailed description of illustrative embodiments exemplifying the best mode of carrying out the present disclosure as presently perceived.

The detailed description particularly refers to the accompanying figures in which:
Fig. 1 is a side elevation view of a fluid filter unit mounted on an engine, with portions broken away, showing normal fluid flow through a filter media included in the unit and location of a nonwelded filter media bypass valve assembly in a "filtered fluid" region formed in the filter media;
Fig. 2 is an enlarged view of a portion of the fluid filter unit of Fig. 1 showing movement of a "piston" closure included in the bypass valve assembly against a spring to an opened position to allow flow of unfiltered fluid in the unit to bypass the filter media;
Fig. 3 is a sectional view of components included in the bypass valve assembly of Figs. 1 and 2 showing a monolithic end cap formed to include an end plate and a spring housing appended to the end plate, a spring sized to fit into the spring housing, a piston closure seat formed to include a bypass inlet aperture, and a piston closure adapted to mate with the piston closure seat to close the bypass inlet aperture as suggested in Fig. 4;
Figs. 4-6 illustrate diagrammatically a sequential process for forming a portion of the end plate of the end cap to retain the piston closure seat in a mounted position in the spring housing to retain the piston closure in a movable position between the piston closure seat and the spring;

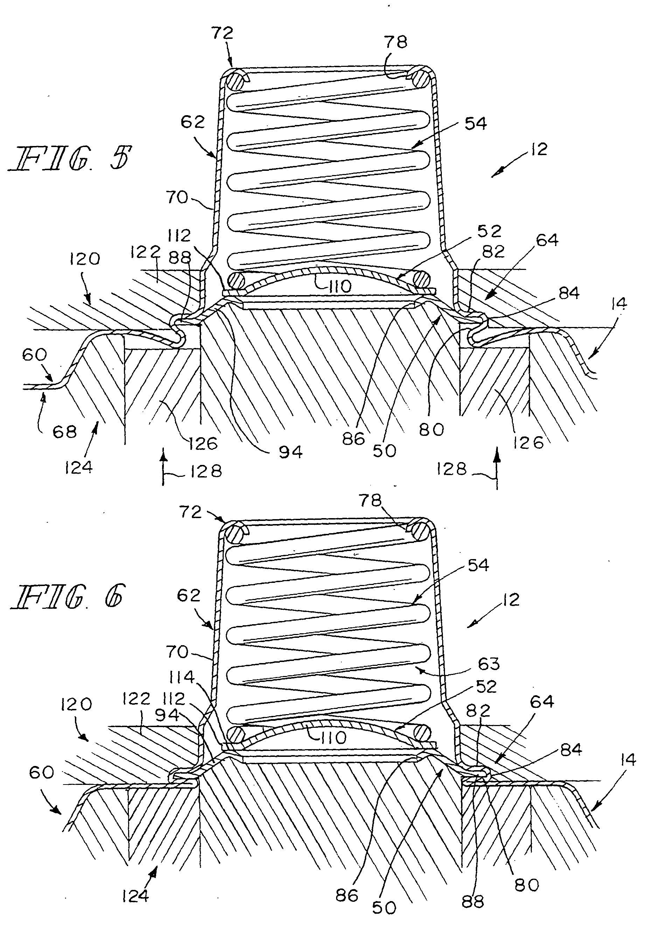

Fig. 4 is a sectional view showing placement of the bypass valve assembly components in a forming tool in an initial mounted position;
Fig. 5 is a view similar to Fig. 4 showing movement of a male portion of the forming tool to begin to crimp an annular retainer portion of the end plate of the end cap; and
Fig. 6 is a view similar to Figs. 4 and 5 showing further movement of the male portion of the forming tool to complete crimping of the annular retainer portion of the end plate to retain the piston closure seat in a fixed position relative to the end cap between two clamp members included in the end plate of the end cap.

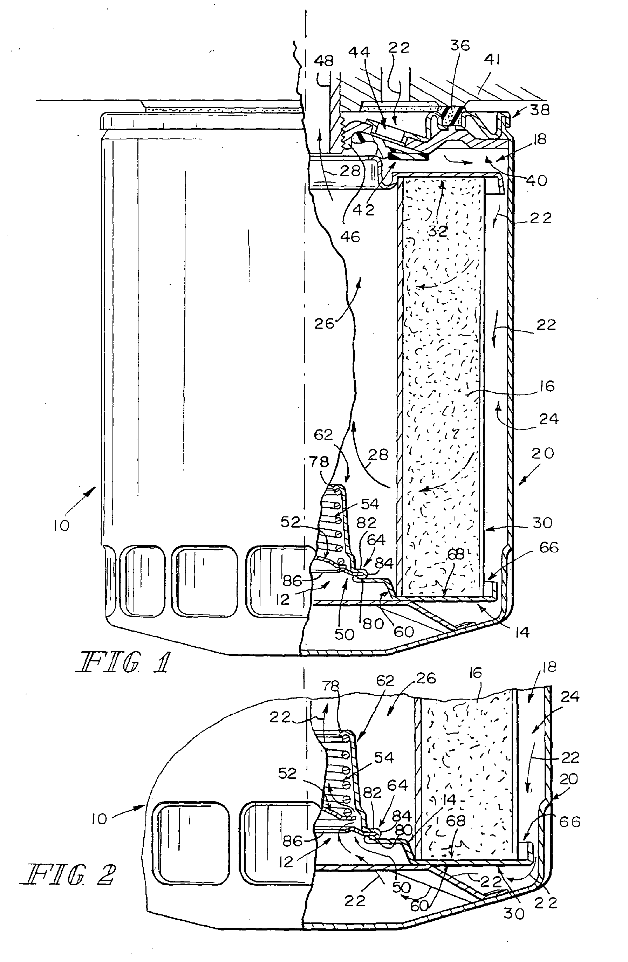

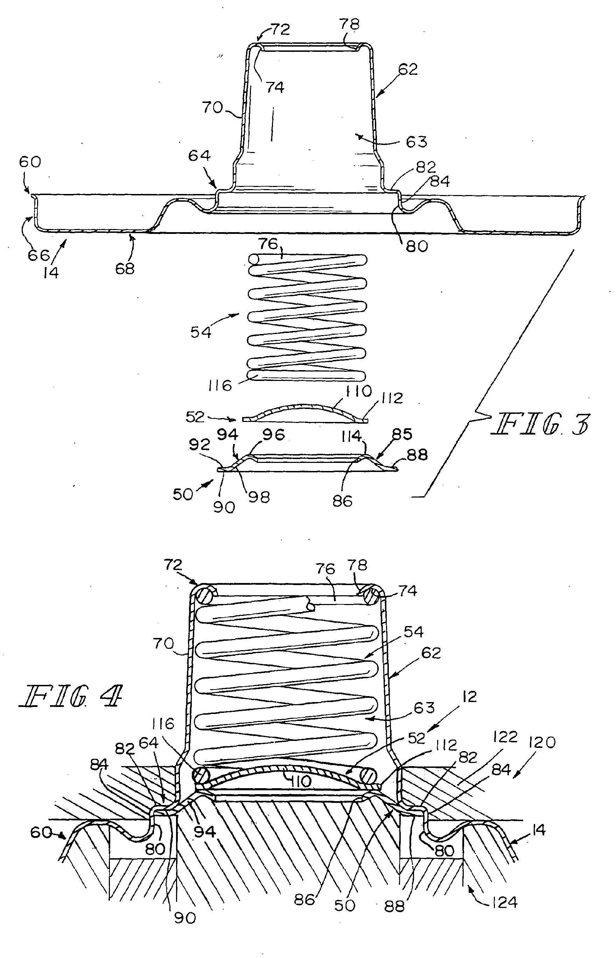

A fluid filter assembly 10 includes a bypass valve assembly 12 clamped to an end cap 14 associated with a filter media 16 mounted in a filter chamber 18 of a filter housing 20 as shown in Figs. 1 and 2. During normal filter operation, bypass valve assembly 12 is "closed" and unfiltered fluid 22 admitted into filter chamber 18 passes from an unfiltered fluid region 24 through filter media 16 to reach a filtered fluid region 26 formed in filter media 16 before the now filtered fluid 28 is discharged from filter housing 20 as shown in Fig. 1. As shown in Fig. 2, under certain conditions the pressure extant in unfiltered fluid region 24 rises to exceed a predetermined level causing bypass valve assembly 12 to "open" so that unfiltered fluid 22 bypasses filter media 16 and flows into filtered fluid region 26.

As suggested in Fig. 1, fluid filter assembly 10 is produced by inserting a filter module 30 comprising outer end cap 14, filter media 16, and an inner end cap 32 into filter chamber 18 through an open mouth formed in one end of filter housing 20. It is within the scope of this disclosure to use any suitable filter module 30 containing any suitable filter media 16 to filter contaminants from oil (or other fluid) flowing through filter housing 20.

A closure 34, which comprises a sealing ring 36, a filter retainer 38, and a bearing plate 40 (located between filter retainer 38 and filter module 30 in the illustrated embodiment) is then coupled to filter housing 20 at the open mouth to retain filter module 30 as shown in Fig. 1. Reference is hereby made to U.S. Application No. 10/138,608, filed May 3, 2002, which application is incorporated by reference herein, for a disclosure of a suitable closure. Sealing ring 36 is adapted to establish a sealed connection with engine block 41 once fluid filter assembly 10 is mounted on engine block 41 as suggested in Fig. 1.

An inlet flow control valve 42 is provided between bearing plate 40 and inner end cap 32 as shown, for example, in Fig. 1 to regulate flow of unfiltered fluid 22 into filter chamber 18 through an inlet 44 formed in closure 34. It is within the scope of this disclosure to employ any suitable inlet flow control valve.

An engine mount sleeve 46 of bearing plate 40 is configured to mate with engine tube 48 as shown, for example, in Fig. 1. Such a coupling allows filtered fluid 28 (and unfiltered fluid 22 in the case shown in Fig. 2) to flow from filtered fluid region 26 in filter module 30 into engine block 41.

As shown best in Fig. 3, bypass valve assembly 12 comprises piston closure seat 50, piston closure 52, and spring 54. Bypass valve assembly 12 is assembled, for example, using a forming technique, as shown in Figs. 46, so that it is unnecessary to use any weldment to retain bypass valve assembly 12 in place on end cap 14. This new assembly process allows the parts to be compressed into place and held in place by means of reforming a "center boss area" 64 of end cap 14 (without any welding), thus creating a "clinched" design.

End cap 14 includes an end plate 60 and a spring housing 62 appended to end plate 60 as shown, for example, in Fig. 3. End cap 14 is monolithic and made of steel material in the illustrated embodiment. End plate 60 includes an annular inner portion 64 appended to spring housing 62, an annular outer portion 66, and a filter support portion 68 arranged to interconnect inner and outer portions 64, 66.

Spring housing 62 includes a cup-shaped side wall 70 having one end appended to annular inner portion 64 of end plate 60 and an opposite end arranged to terminate at an annular bottom rim 72 as shown in Fig. 3. Spring housing 62 is formed to include an interior region providing a spring receiver chamber 63 and sized to receive spring 54 and bottom rim 72 is formed to include an annular channel 74 sized to receive one end 76 of spring 54 therein as shown, for example, in Fig. 4. Bottom rim 72 is also formed to include a bypass outlet aperture 78.

Annular inner portion 64 of end plate 60 includes a first clamp member 80, a second clamp member 82, and an outer rim 84 interconnecting first and second clamp members 80, 82 as shown in Figs. 3 and 6. In a pre-assembly stage shown in Fig. 3, first and second clamp members 80, 82 and outer rim 84 have been formed to assume an initial shape. During the forming process shown in Figs. 46, first and second clamp members 80, 82 and outer rim 84 are moved to assume other shapes to clamp piston closure seat 50 in a fixed position relative to end cap 14. It is therefore unnecessary to weld piston closure seat 50 to anchor it in place in end cap 14.

Piston closure seat 50 includes an annular rim 85 formed to include a bypass inlet aperture 86 and a clamp portion 88 arranged to surround annular rim 85 as shown, for example, in Fig. 3. Upon assembly, clamp portion 88 is trapped between first and second clamp members 80, 82 and surrounded by outer rim 84 as shown best in Fig. 6. Clamp portion 88 is an annular ring in the illustrated embodiment and includes an outer flat surface 90 arranged to engage first clamp member 80 and an inner flat surface 92 arranged to engage second clamp member 82. Piston closure seat 50 is made of steel material in the illustrated embodiment.

Annular rim 85 of piston closure seat 50 includes an annular inner edge defining bypass inlet aperture 86 and a radially outer portion appended to clamp portion 88 as shown in Fig. 3. Annular rim 85 also includes a frustoconical portion 94 located between annular inner edge 86 and clamp portion 88. Frustoconical portion 94 includes a small diameter end portion 96 sized to have a first diameter and a large diameter end portion 98 sized to have a second diameter that is greater than the first diameter and formed to define the radially outer portion of annular rim 85 as shown in Fig. 3.

Piston closure 52 includes a dome 110 and an annular spring seat 112 arranged to surround dome 110. Spring seat 112 is configured to mate with an annular sealing surface 114 included in piston closure seat 50 upon movement of piston closure 52 to its closed position as suggested in Figs. 3 and 4. Piston closure 52 is made of 0.018 inch thick electro-tin plate steel in the illustrated embodiment.

Spring 54 is configured to yieldably bias piston closure 52 normally to close bypass inlet aperture 86 formed in piston closure seat 50. One end 76 of spring 54 lies in annular channel 74 of spring housing 62 and an opposite end 116 of spring 54 engages annular spring seat 112 of piston closure 52 as shown in Fig. 4. Spring 54 is a coiled compression spring in the illustrated embodiment.

Piston closure seat 50, piston closure 52, and spring 54 can be assembled to produce a bypass valve assembly 12 coupled to end cap 14 mechanically and without using any weldment in the manner suggested in Figs. 36 to eliminate costs of welding electrodes, refurbishing of electrodes, and lost production time due to welding issues. Initial placement of those components in an initial mounted position in a forming tool 120 including a female portion 122 and a male portion 124 is shown in Fig. 4. Movement of a first male portion section 126 in direction 128 to begin to crimp an annular retainer portion of end plate 60 is shown in Fig. 5. Further movement of first male portion section 126 in direction 128 to complete crimping of the annular retainer portion of end plate 60 to retain piston closure seat 50 in a fixed position relative to end cap 14 between two clamp members 80, 82 included in end plate 60 of end cap 14 is shown in Fig. 6.

Operation of fluid filter assembly 10 is shown in Figs. 1 and 2. During normal operation, fluid 22 is filtered in filter media 16 as shown in Fig. 1, while in certain circumstances, bypass valve assembly 12 opens so that unfiltered fluid 22 is allowed to bypass filter media 16 as shown in Fig. 2.

Filter media 16 includes an exterior portion located in filter chamber 18 to contact fluid 22 admitted into unfiltered-fluid region 24 in filter chamber 18 through an inlet 44 formed in closure 40. Filter media 16 is formed to include an interior portion defining a filtered-fluid region 26 located in filter media 16 to receive fluid 22 that has passed through filter media 16 from the exterior portion to the interior portion. Monolithic end cap 14 includes a spring housing 62 formed to include a spring receiver chamber 63 and opening into the filtered-fluid region 26 and an end plate 60 coupled to filter media 16 and to spring housing 62 and arranged to support spring housing 62 in the filtered-fluid region 26 located in filter media 16.

Bypass valve assembly 12 is coupled to monolithic end cap 14 and arranged to regulate flow of fluid in filter housing 20 from unfiltered-fluid region 24 into the spring receiver chamber 63 for discharge into filtered-fluid region 26 via bypass outlet aperture 78. Bypass valve assembly 12 includes a piston closure seat 50 formed to include a bypass inlet aperture 86 exposed to unfiltered fluid 22 in the unfiltered-fluid region 24 in filter chamber 18 and a clamp portion 112 trapped between two clamp members 80, 82 of end plate 60 to retain the piston closure seat 50 in a fixed position relative to the monolithic end cap 14. Piston closure 52 is arranged in spring receiver chamber 63 to move toward piston closure seat 50 to assume a closed position closing bypass inlet aperture 86 and blocking flow of fluid 22 from unfiltered-fluid region 24 into filtered-fluid region 26 through spring receiver chamber 63 as shown in Fig. 1 and to move away from piston closure seat 50 to assume an opened position opening bypass inlet aperture 86 and allowing flow of fluid 22 from unfiltered-fluid region 24 into filtered-fluid region 26 through spring receiver chamber 63 as shown in Fig. 2. A yieldable spring 54 is arranged in spring receiver chamber 63 normally to move piston closure 50 to the closed position as shown in Fig. 1.

End cap 14 and bypass valve assembly 12 cooperate to define bypass means for selectively conducting fluid 22 along a flow path through filter chamber 18 to bypass filter media 16 as shown, for example, in Fig. 2. Spring housing 62 and spring 54 cooperate to define a spring mechanism arranged to urge piston closure 52 normally to the closed position as shown, for example, in Fig. 1 to block flow of unfiltered fluid 22 through bypass inlet aperture 86 formed in piston closure seat 50.

## Claims

1. A fluid filter assembly, comprising:
a filter housing formed to include a filter chamber,
a filter element positioned in the filter chamber, the filter element including a filter media and an end cap coupled to one end of the filter media, and
a bypass valve assembly clamped to the end cap.

2. The fluid filter of claim 1, wherein the bypass valve assembly is crimped to the end cap.

3. The fluid filter of claim 1, wherein:
the filter media includes a filtered-fluid region located in the interior thereof to receive fluid that has passed through the filter media,
the end cap includes (i) a spring housing, and (ii) an end plate coupled to the filter media and to the spring housing, the end plate being arranged to support the spring housing in the filtered-fluid region of the filter media,
the bypass valve assembly includes:
a piston closure seat having (i) a bypass inlet aperture, and (ii) a clamp portion trapped between two clamp members of the end plate to retain the piston closure seat in a fixed position relative to the end cap,
a piston closure positioned in the spring housing, the piston closure being movable between (i) a closed position in which the piston closure blocks a flow of fluid through the bypass inlet aperture and into the filtered-fluid region, and (ii) an opened position in which the piston closure allows a flow of fluid through the bypass inlet aperture and into the filtered-fluid region, and
a spring arranged in the spring housing, the spring biasing the piston closure into its closed position.

4. The assembly of claim 3, wherein the clamp portion of the piston closure is an annular ring.

5. The assembly of claim 4, wherein the annular ring has an outer flat surface arranged to engage a first of the clamp members of the end plate and an inner flat surface arranged to engage a second of the clamp members of the end plate.

6. The assembly of claim 3, wherein the clamp portion has an outer surface arranged to engage a first of the clamp members of the end plate and an inner surface arranged to engage a second of the clamp members of the end plate.

7. The assembly of claim 6, wherein each of the inner and outer surfaces has an annular shape.

8. The assembly of claim 7, wherein the end plate further includes an outer rim surrounding the clamp portion and the first and second clamp members of the end plate.

9. The assembly of claim 3, wherein the piston closure includes a dome having an annular spring seat positioned therearound, the spring seat being configured to mate with an annular sealing surface defined in the piston closure seat thereby blocking a flow of fluid through the bypass inlet aperture when the piston closure is positioned in its closed position.

10. The assembly of claim 9, wherein the spring biases the spring seat of the piston closure into contact with the sealing surface defined in the piston closure seat.
